(19) Europäisches Patentamt
European Patent Office
Office européen des brevets

(11) EP 4 678 672 A1

(12) EUROPEAN PATENT APPLICATION

(43) Date of publication:
**14.01.2026 Bulletin 2026/03**

(21) Application number: **24187482.5**

(22) Date of filing: **09.07.2024**

(51) International Patent Classification (IPC):
***C08G 18/10*** *(2006.01)* ***C08G 18/12*** *(2006.01)*
***C08G 18/24*** *(2006.01)* ***C08G 18/28*** *(2006.01)*
***C09D 175/04*** *(2006.01)* ***C09J 175/04*** *(2006.01)*

(52) Cooperative Patent Classification (CPC):
(C-Sets available)
**C08G 18/10; C08G 18/12; C08G 18/246; C08G 18/283; C08G 18/289; C09D 175/04; C09J 175/04** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Saint-Gobain Weber France**
**94370 Sucy en Brie (FR)**

(72) Inventors:
- **HERMANT, Fabien**
**93300 Aubervilliers (FR)**
- **ROQUART, Maïlie**
**93300 Aubervilliers (FR)**
- **VARELAS, Konstantinos**
**32011 Oinofyta (GR)**

(74) Representative: **Saint-Gobain Recherche**
**41 Quai Lucien Lefranc**
**93300 Aubervilliers (FR)**

(54) **WATERPROOFING COATING FORMED FROM A SILANE-TERMINATED POLYMER**

(57) The present invention relates to a waterproofing coating formed from a composition comprising a polymer mixture, wherein said polymer mixture is obtained by a process comprising:
a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M1; and
b) contacting said mixture M1 with a silane comprising at least one NCO-reactive group.

It also relates to a process for waterproofing a substrate, comprising forming a waterproofing coating on the substrate using said composition.

(52) Cooperative Patent Classification (CPC): (Cont.)

C-Sets
**C08G 18/10, C08G 18/283;**
**C08G 18/12, C08G 18/289**

## Description

The present invention relates to a waterproofing coating, and more particularly a waterproofing membrane, which formed from a composition comprising a silane-terminated polymer mixture. It also relates to a process for waterproofing a substrate, comprising forming a waterproofing coating on the substrate using said composition.

Curable compositions based on organic polymers containing reactive silane groups play an important role in many industrial applications. Such polymers are also referred to as "silane-functional polymers", "silane-modified polymers" (SMP) or "silane-terminated polymers" (STP), and are considered as hybrid polymers. Compositions containing these polymers are cured via crosslinking reactions of the reactive silane groups on the polymers, which hydrolyze under the influence of moisture, condense with one another as silanol groups and thus form siloxane bonds. Most commonly, these reactive silane groups are alkoxysilane or acyloxysilane groups. Depending on the content of silyl groups and their structure, various types of polymers can be obtained, such as long-chain polymers (thermoplastics), relatively coarse-meshed three-dimensional networks (elastomers) or highly crosslinked systems (thermosets). Silane-terminated polymers can in particular be obtained by reacting isocyanate group-containing polymers with a silane comprising an amino or any other isocyanate-reactive group. Usually, the amount of such silane is such that the isocyanate groups are completely reacted with the isocyanate-reactive groups of the silanes and no free isocyanate groups remain. The isocyanate group-containing polymers can be obtained by reacting diisocyanates with high molecular weight polyols, in particular diols. The molecular weight of the isocyanate group-containing polymer can be controlled by adjusting the molar ratio of the NCO groups of the diisocyanate to the hydroxyl groups of the high molecular weight polyol.

For instance, EP 2 952 533 discloses the production of silane-terminated polymers by reacting polyoxypropylene diol with isophorone diisocyanate at an NCO:OH ratio of 2.1:1 and subsequently reacting the resulting product with a diethyl N-(3-trialcoxysilylpropyl)aminosuccinate.

Due to their capacity for moisture-dependent crosslinking, silane-terminated polymers may particularly be suitable for a use as moisture-curing coatings, and in particular for the waterproofing of roofs, terraces, balconies, wet rooms, swimming pools, or facades. As they are free of isocyanate groups, they can - unlike isocyanate prepolymers - be combined with formulation components bearing isocyanate-reactive groups, such polyol-based plasticizers and aminosilane-based adhesion promoters. However, one disadvantage of STP polymers used for coatings is their high viscosity, which makes their application on substrates difficult.

The inventors have now discovered that the viscosity of silane-terminated polymers could be lowered by reacting a part of the isocyanate groups of the isocyanate group-containing polymers with a compound comprising exactly one isocyanate-reactive group, before adding the silane. Such monofunctional compound allows to control the crosslink density of the final material, and can play the role of pending chains in the crosslink network.

## SUMMARY

Thus, the present invention relates to a waterproofing coating formed from a composition comprising a polymer mixture, wherein said polymer mixture is obtained by a process comprising:

a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M1; and
b) contacting said mixture M1 with a silane comprising at least one NCO-reactive group.

In some embodiments, polymer P1 has a number-average molecular weight of:

- at least 1000 g/mol, preferably at least 2000 g/mol; and
- at most 60 000 g/mol, preferably at most 30 000 g/mol.

In some embodiments, polymer P1 is a polymer chosen from a polyacrylate, a polycarbonate, a polyester, a polyurethane, a polysiloxane, a polyether, a polyisoprene, a polybutadiene, copolymers thereof and mixtures thereof, where said polymer further comprises NCO groups such that its average NCO-functionality is of at least two.

In some embodiments, polymer P1 has an average NCO-functionality from two to four.

In some embodiments, compound C1 has a molecular weight from 50 to 25000 g/mol, preferably from 50 to 15000 g/mol, more preferably from 50 to 4000 g/mol, even more preferably from 90 to 2000 g/mol, for instance from 90 to 600 g/mol.

In some embodiments, said NCO-reactive group of compound C1 is a hydroxy group, a mercapto group, a primary amino group, a secondary amino group, a carboxy, or an amido, preferably a hydroxy group. In some embodiments, said molar ratio of NCO-reactive groups of C1 to NCO groups of P1 is from 0.05 to 0.8, preferably from 0.07 to 0.7,

more preferably from 0.1 to 0.6, even more preferably from 0.15 to 0.5.

In some embodiments, said silane comprising at least one NCO-reactive group is of formula (I):

$$R^1\text{-}Si(OR^2)_x(R^3)_{3-x} \qquad (I),$$

in which:

- x is 2 or 3,
- $R^1$ is a C1-C20 hydrocarbon group comprising at least one NCO-reactive group, said hydrocarbon group being optionally substituted by at least one group of formula $-Si(OR^2)_x(R^3)_{3-x}$,
- $R^2$ is a C1-C20 aliphatic group, a C3-C20 alicyclic group, a C6-C20 aromatic group, a C2-C20 acyl group, or a C2-C20 iminyl group, and
- $R^3$ is a C1-C20 aliphatic group, a C3-C20 alicyclic group, a C6-C20 aromatic group.

In some embodiments, said NCO-reactive group of the silane is a hydroxy group, a mercapto group, a primary amino group, a secondary amino group, a carboxy, or an amido, preferably a primary or secondary amino group.

In some embodiments, polymer P1 is produced by:

o) reacting a polymer P0 comprising NCO-reactive groups with an average NCO-reactive-functionality of at least two with a diisocyanate,
wherein polymer P0 preferably has an average NCO-reactive-functionality from two to four.

In some embodiments, polymer P0 has a number-average molecular weight of:

- at least 1000 g/mol, preferably at least 2000 g/mol; and
- at most 60 000 g/mol, preferably at most 30 000 g/mol.

In some embodiments, polymer P0 is chosen from hydroxyl-terminated polyethers, hydroxyl-terminated polycarbonates, amine-terminated polyethers, amine-terminated polyesters, hydroxyl-terminated polyesters, hydroxyl-terminated polycarbonate polyesters, hydroxyl-terminated polyisoprenes, hydroxyl-terminated polybutadienes, copolymers thereof and mixtures thereof.

In some embodiments, the molar ratio of NCO groups of the diisocyanate to the NCO-reactive groups of polymer P0 is from 1.1 to 3, preferably from 1.4 to 2.8, more preferably from 1.6 to 2.4, for instance from 1.8 to 2.2.

In some embodiments, said composition further comprises one or more ingredients chosen from fillers, adhesion promoters, plasticizers, crosslinking catalysts, drying agents, solvents, and reactive diluents. In some embodiments, said waterproofing coating has a thickness of 0.1 to 2.5 mm, in particular 0.2 to 2.0 mm, for instance 0.5 to 1.5 mm.

The present invention also relates to a process for waterproofing a substrate, said process comprising:

- applying a composition as defined herein on a substrate, so as to form a first coating, and
- moisture-curing said first coating, so as to form a waterproofing coating,

said waterproofing coating preferably having a thickness of 0.1 to 2.5 mm, in particular 0.2 to 2.0 mm, for instance 0.5 to 1.5 mm.

In some embodiments, said substrate is a substrate of a roof, terrace, balcony, wet room or facade.

In some embodiments, said substrate is made of cementitious material.

DETAILED DESCRIPTION

The composition, from which the waterproofing coating of the invention is formed, may be referred to as a "moisture-curable composition". Such composition comprises a polymer mixture that is obtained by a process comprising:

a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M1; and
b) contacting said mixture M1 with a silane comprising at least one NCO-reactive group.

In step a), a polymer comprising NCO groups (i.e. isocyanate groups) is used. Such polymer is referred to as "polymer P1" in the present application.

Polymer P1 has an average NCO-functionality of at least two. As used herein, the "average NCO-functionality" is defined by the following equation (1):

$$\overline{f1} = \frac{\sum xi \times fi}{\sum xi} \quad (1),$$

in which, for each polymer chain i of polymer P1, *xi* is the number of moles of such polymer chain i and *fi* is the NCO-functionality of such polymer chain i. The NCO-functionality of such polymer chain i refers to the number of NCO groups of such polymer chain i.

For instance, if 1 mole of polymer P1 consists of 0.75 mol ($x_A$) of polymer chains A having 2 NCO groups ($f_A = 2$) and 0.25 mol ($x_B$) of polymer chains B having 3 NCO groups ($f_B = 3$), then the average NCO-functionality is $\overline{f1} = (0.75 \times 2 + 0.25 \times 3)/(0.25+0.75) = 2.25$.

Polymer P1 may in particular have an average NCO-functionality from 2 to 6, for instance from 2 to 5, preferably from 2 to 4, more preferably from 2 to 3.

Advantageously, polymer P1 has a number-average molecular weight of at least 1000 g/mol, preferably at least 2000 g/mol, more preferably at least 5000 g/mol.

Advantageously, polymer P1 has a number-average molecular weight of at most 60 000 g/mol, preferably at most 50 000 g/mol, more preferably at most 40 000 g/mol, even more preferably at most 30 000 g/mol, for instance at most 20 000 g/mol, for instance at most 10 000 g/mol.

The number-average molecular weight of a polymer can be determined by size exclusion chromatography ("SEC") or light scattering.

Polymer P1 may be a polymer chosen from a polyacrylate, a polycarbonate, a polyester (e.g. polycaprolactone), a polycarbonate polyester, a polyurethane, a polyether (e.g. polyethylene glycol, polypropylene glycol, polytetrahydrofuran), a polysiloxane, a polyisoprene, a polybutadiene, copolymers thereof and mixtures thereof, where said polymer further comprises NCO groups such that its average NCO-functionality is of at least two. Usually, NCO groups of a polymer P1 are linked to the remaining of the polymer through a hydrocarbon moiety comprising a -C(O)-NH- moiety.

When the expression "copolymers thereof" is used in a list of polymers, it is intended to include any copolymer, such as alternating, random, block or graft copolymer, of the polymers from such list. For instance, in the above list provided for polymer P1, a copolymer may be a poly(butadiene-co-isoprene).

In a preferred embodiment, polymer P1 is a polyether (such as a polyethylene glycol, polypropylene glycol, polytetrahydrofuran) further comprising NCO groups such that its average NCO-functionality is of at least two.

In some embodiments, polymer P1 may be a polymer of formula $A(B\text{-}C\text{-}D)_w$, or a mixture of polymers having such formula, wherein:

- A is a polymer chain chosen from a polyacrylate, a polycarbonate, a polyester (e.g. polycaprolactone), a polyurethane, a polysiloxane, a polyether (e.g. polyethylene glycol, polypropylene glycol, polytetrahydrofuran), a polyisoprene, a polybutadiene and copolymers thereof;
- B is a group of formula -C(O)-NH-;
- C is a divalent hydrocarbon moiety preferably having 2 to 18 carbon atoms,
- D is a -NCO group; and
- w is an integer from 2 to 6, for instance from 2 to 5, preferably from 2 to 4, more preferably w is 2 or 3.

C may in particular be an alkylene, an arylene or a combination thereof. As used herein, a combination of alkylene and arylene refers to one or more alkylene and one or more arylene linked to each other, such as -(alkylene)-(arylene)-(alkylene)-, -(alkylene)-(arylene)-, or -(arylene)-(alkylene)-(arylene)-.

C may more particularly be a moiety chosen from 1,4-butanyl, 1,5-pentanyl, 1,6-hexanyl, (2-methyl)-1,5-pentanyl, (2,2-dimethyl)-1,5-pentanyl, (2,2,4-trimethyl)-1,6-hexanyl, (2,4,4-trimethyl)-1,6-hexanyl, 1,10-decanyl, 1,3-cyclohexanyl, 1,4-cyclohexanyl, (3,3,5-trimethyl)-1,4-cyclohexanyl, (2-methyl)-1,3-cyclohexanyl, (4-methyl)-1,3-cyclohexanyl, (3,3-dimethyl-5-methyl)-1-cyclohexanyl, (1-methyl-4-methyl)-1-cyclohexanyl, 2,4'-dicyclohexylmethanyl, 4,4'-dicyclohexylmethanyl, 1,3-bis(methyl)cyclohexanyl, 1,4-bis(methyl)cyclohexanyl, bis(*methyl*)norbornanyl5, 3,3'-dimethyl-4,4'-dicyclohexylmethanyl, 3,3',5,5'-tetramethyl-4,4'-dicyclohexylmethanyl, 4,4'-[1,1'-bi(cyclohexyl)], (3,3'-dimethyl)-4,4'-[1,1'-bi(cyclohexyl)], 2,2',5,5'-tetramethyl-4,4'-[1,1'-bi(cyclohexyl)], 1,8-p-menthanyl, 1,3-diisocyanatoadamantane, 1,3-dimethyl-5,7-adamantanyl, 1,3-bis(methyl)benzene, 1,4-bis(methyl)benzene, 1,3-bis(1-methylethyl) benzene, 1,4-bis(1-methylethyl)benzene, bis(4-(1-methylethyl)phenyl) carbonate, 2,4-toluene, 2,6-toluene, 2,4'-diphenylmethanyl, 4,4'-diphenylmethanyl, 1,5-naphthalene.

In this above list, the numbers or groups in italic indicate the position by which the divalent group C is attached to the remaining of the polymer. For instance, if C is (3,3-dimethyl-5-methyl)-1-cyclohexanyl, then the divalent group C can be

represented as follows, wherein the symbol • indicates the positions by which the divalent group C is attached to the remaining of the polymer.

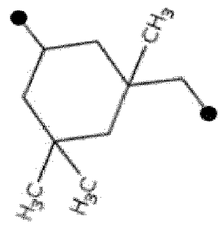

Polymer P1 can be produced by any suitable method known to the skilled artisan (for instance, methods as described in EP2948487 or US9102854). Preferably, polymer P1 is produced by a process comprising the following step: o) reacting a polymer comprising NCO-reactive groups with an average NCO-reactive-functionality of at least two with a diisocyanate.

The polymer comprising NCO-reactive groups used in step o) is referred to as "polymer P0" in the present application.

As used herein, the "NCO-reactive group" refers to any chemical group which is able to react, typically through a condensation reaction, with an isocyanate (NCO) group. Such NCO-reactive group may in particular be a compound containing an active hydrogen. An active hydrogen refers to a hydrogen which, because of its position in the molecule, displays significant activity according to the Zerewitnoff test described by Wohler in the Journal of the American Chemical Society, Vol. 49, p. 3181 (1927). Such NCO-reactive groups are well-known to the skilled artisan. For instance, such NCO-reactive groups may be a hydroxy group (-OH), a mercapto group (-SH), a primary amino group ($-NH_2$), a secondary amino group (-NH-), a carboxy (-COOH), or an amido (-C(O)-NH-, in particular $-C(O)NH_2$).

A preferred NCO-reactive group for polymer P0 is hydroxy group (-OH).

Polymer P0 may comprise NCO-reactive groups which are all identical to each other or may comprise different NCO-reactive groups.

Polymer P0 has an average NCO-reactive-functionality of at least two. As used herein, the "average NCO-reactive-functionality" is defined by the following equation (2):

$$\overline{f0} = \frac{\sum xj \times fj}{\sum xj} \qquad (2),$$

in which, for each polymer chain *j* of polymer P0, *xj* is the number of moles of such polymer chain *j* and *fj* is the NCO-reactive-functionality of such polymer chain *j*. The NCO-reactive-functionality of such polymer chain *j* refers to the number of NCO-reactive groups of such polymer chain *j*.

Polymer P0 may in particular have an average NCO-reactive-functionality from 2 to 6, for instance from 2 to 5, preferably from 2 to 4, more preferably from 2 to 3.

Advantageously, polymer P0 has a number-average molecular weight of at least 1000 g/mol, preferably at least 2000 g/mol.

Advantageously, polymer P0 has a number-average molecular weight of at most 60 000 g/mol, preferably at most 50 000 g/mol, more preferably at most 40 000 g/mol, even more preferably at most 30 000 g/mol, for instance at most 20 000 g/mol, in particular at most 10 000 g/mol.

Polymer P0 may be a polymer chosen from a polyacrylate, a polycarbonate, a polyester (e.g. polycaprolactone), a polycarbonate polyester, a polyurethane, a polysiloxane, a polyether (e.g. polyethylene glycol, polypropylene glycol, polytetrahydrofuran), a polyisoprene, a polybutadiene, copolymers thereof and mixtures thereof, where said polymer comprises NCO-reactive groups such that its average NCO-reactive-functionality is of at least two.

More particularly, P0 may be chosen from hydroxyl-terminated polyethers (such as hydroxyl-terminated polyethylene glycol, hydroxyl-terminated polypropylene glycol, hydroxyl-terminated polytetrahydrofuran), hydroxyl-terminated polycarbonates, amine-terminated polyethers, amine-terminated polyesters, hydroxyl-terminated polyesters (such as hydroxyl-terminated polycaprolactone), hydroxyl-terminated polyisoprene, hydroxyl-terminated polybutadiene, copolymers thereof and mixtures thereof. In a preferred embodiment, P0 is a hydroxyl-terminated polyether (such as hydroxyl-terminated polyethylene glycol, hydroxyl-terminated polypropylene glycol, or hydroxyl-terminated polytetrahydrofuran), or a hydroxyl-terminated polycarbonate polyester, more preferably hydroxyl-terminated polypropylene glycol.

As used herein, "diisocyanate" refers to any organic compound comprising two NCO groups. Typically, said diisocyanate used in step o) is a monomeric compound, i.e. not a polymeric compound. The molecular weight of the diisocyanate may be from 100 to 500 g/mol, more particularly from 120 to 350 g/mol.

Advantageously, said diisocyanate is chosen from 1,4-diisocyanatobutane, 1,5-diisocyanatopentane, hexamethylene 1,6-diisocyanate, 2-methyl-1,5-diisocyanatopentane, 1,5-diisocyanato-2,2-dimethylpentane, 2,2,4- and/or 2,4,4-trimethyl-1,6-diisocyanatohexane, 1,10-diisocyanatodecane, 1,3- and/or 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane, 1-isocyanato-1-methyl-4-isocyanatomethylcyclohexane, 2,4'- and/or 4,4'-diisocyanatodicyclohexylmethane, 1,3- and/or 1,4-bis(isocyanatomethyl)cyclohexane, bis(isocyanatomethyl)norbornane, 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- or 1,4-bis(isocyanatomethyl)benzene, 1,3- or 1,4-bis(1-isocyanato-1-methylethyl)benzene, bis(4-(1-isocyanato-1-methylethyl)phenyl) carbonate, 2,4- and/or 2,6-diisocyanatotoluene, 2,4'- or 4,4'-diisocyanatodiphenylmethane, 1,5-diisocyanatonaphthalene, and mixtures thereof.

Preferably, said diisocyanate is chosen from 4,4'-diisocyanatodicyclohexylmethane, 1-isocyanato-3,3,5-trimethyl-5-isocyanatomethylcyclohexane, 2,4'- or 4,4'-diisocyanatodiphenylmethane, 2,4- and/or 2,6-diisocyanatotoluene.

The molar amount of NCO of the diisocyanate is advantageously higher than the molar amount of NCO-reactive groups of polymer P0. Preferably, the molar ratio of NCO groups of the diisocyanate to the NCO-reactive groups of polymer P0 is from 1.1 to 3.6, more preferably 1.1 to 3, even more preferably from 1.4 to 2.8, for instance from 1.6 to 2.4, such as from 1.8 to 2.2.

The contacting in step o) is typically carried out at a temperature from 5 to 90°C, more particularly from 15°C to 80°C, for instance from 30 to 70°C.

The contacting in step o) is typically carried out in the absence of solvent (e.g. in the absence of organic solvent and water).

The contacting in step o) is advantageously carried out under an inert atmosphere (e.g. $N_2$ or Ar atmosphere).

The contacting in step o) is advantageously carried out in the presence of a catalyst. Such catalyst is a catalyst of the reaction between the NCO groups of the diisocyanate and the NCO-reactive groups of polymer P0. Examples of such catalysts include, but are not limited to, tin-based catalyst (e.g. dibutyltin di-laureate), bismuth-based catalyst (e.g. bismuth carboxylates), zirconium-based catalyst, and titanium-based catalyst.

The contacting in step o) is typically carried out for a duration from 15 min to 24h, preferably from 30 min to 4h.

In step a), polymer P1 is contacted with a compound comprising exactly one NCO-reactive group. Such compound comprising exactly one NCO-reactive group used in step a) is referred to as "compound C1" in the present application.

The NCO-reactive groups of compound C1 may be a hydroxy group (-OH), a mercapto group (-SH), a primary amino group ($-NH_2$), a secondary amino group (-NH-), a carboxy (-COOH), or an amido (-C(O)-NH-, in particular -C(O)$NH_2$).

A preferred NCO-reactive group for compound C1 is hydroxy group (-OH). In other words, a preferred compound C1 is a monool.

Compound C1 may be a monomeric compound or a polymer. C1 may be linear or branched. Advantageously, compound C1 has a molecular weight of at least 50 g/mol, preferably at least 90 g/mol, more preferably at least 150 g/mol, for instance at least 200 g/mol.

Advantageously, compound C1 has a molecular weight of at most 25000 g/mol, preferably at most 15 000 g/mol, more preferably at most 10000 g/mol, even more preferably at most 4 000 g/mol, for instance at most 2 000 g/mol, more particularly at most 1000 g/mol, or even more particularly at most 600 g/mol.

When compound C1 is a polymer, then the molecular weight refers to the number-average molecular weight.

In some embodiments, compound C1 is a polymer chosen from a polyacrylate, a polycarbonate, a polyester (e.g. polycaprolactone), a polyurethane, a polyether (e.g. polyethylene glycol, polypropylene glycol, polytetrahydrofuran), a polyisoprene, a polybutadiene, copolymers thereof and mixtures thereof, where said polymer comprises exactly one NCO-reactive group.

In a more particular embodiment, compound C1 is a polymer chosen from a polyacrylate monool, a polycarbonate monool, a polyester (e.g. polycaprolactone) monool, a polyurethane monool, a polyether (e.g. polyethylene glycol, polypropylene glycol, polytetrahydrofuran) monool, a polyisoprene monool, a polybutadiene monool, copolymers thereof and mixtures thereof.

In some embodiments, compound C1 is a polyether comprising exactly one NCO-reactive group. In a preferred embodiment, compound C1 is a polyether comprising exactly one hydroxy group (namely a polyether monool). Polyether monools can be prepared by any suitable method known to the skilled artisan, such as methods described in US 5,158,922, EP 0,654,302 or EP 0,950,679.

The molar ratio of NCO-reactive groups of C1 to NCO groups of P1 is from 0.01 to 0.9. Such ratio allows that a part of the NCO groups of P1 remains present at the end of the reaction in step a), while the other part of the NCO groups of P1 is

functionalized with compound C1 through reaction with the NCO-reactive group.

Preferably, the molar ratio of NCO-reactive groups of C1 to NCO groups of P1 is from 0.05 to 0.8, more preferably from 0.07 to 0.7, even more preferably from 0.1 to 0.5, for instance from 0.15 to 0.5.

The contacting in step a) is typically carried out at a temperature from 5 to 95°C, more particularly from 30°C to 90°C, for instance from 50 to 85 °C.

The contacting in step a) is typically carried out in the absence of solvent (e.g. in the absence of organic solvent and water). When compound C1 has a high molecular weight, typically above 2000 g/mol, or even above 4000 g/mol, it may be advantageous to carry out step a) in the presence of a plasticizer, which may help decreasing the viscosity of the mixture of step a). Examples of plasticizers include those mentioned below.

The contacting in step a) is advantageously carried out under an inert atmosphere (e.g. $N_2$ or Ar atmosphere).

The contacting in step a) is advantageously carried out in the presence of a catalyst. Such catalyst is a catalyst of the reaction between the NCO groups of the diisocyanate and the NCO-reactive groups of polymer P0, such as those mentioned above.

The contacting in step a) is typically carried out for a duration from 15 min to 24h, preferably from 30 min to 8h.

The mixture produced in step a) is referred to as "mixture M1" in the present application.

In step b), said mixture M1 is contacted with a silane comprising at least one (for instance, one or two) NCO-reactive group. Preferably, said silane comprises exactly one NCO-reactive group.

Such silane may be any suitable silane comprising a silane moiety able to cure when in contact with moisture. Such silane comprises a moisture-curable silane moiety and at least one NCO-reactive group. Usually, such silane comprises:

- at least one (e.g. one, two or three) silicon atom,
- at least two (e.g. two or three) Si-O bond, formed between a silicon atom and an oxygen-containing hydrocarbon group,
- at least one Si-C bond with a hydrocarbon group comprising at least one NCO-reactive group, and
- optionally at least one Si-C bond with a hydrocarbon group deprived of NCO-reactive group. Examples of oxygen-containing hydrocarbon group include, but are not limited to, alcoxy, acetoxy, or oxime group.

Said silane may thus be chosen from an alcoxy-silane comprising at least one NCO-reactive group, an acetoxy-silane comprising at least one NCO-reactive group, and an oximino-silane comprising at least one NCO-reactive group, and mixtures thereof.

The NCO-reactive group(s) of the silane may be a hydroxy group (-OH), a mercapto group (-SH), a primary amino group (-NH2), a secondary amino group (-NH-), a carboxy (-COOH), or an amido (-C(O)-NH-, in particular $-C(O)NH_2$). Preferably, the NCO-reactive group(s) of the silane is(are) chosen from a primary amino group and secondary amino group. More preferably, the NCO-reactive group(s) of the silane is(are) a secondary amino group.

Examples of silanes comprising at least one NCO-reactive group(s) of the silane chosen from primary amino group and secondary amino group include, but are not limited to, (N-(2-aminoethyl)-3-aminopropylmethyldimethoxysilane), bis[3-(trimethoxysilyl)propyl]amine, 3-aminopropyltrimethoxysilane, 3-aminopropyldimethoxymethylsilane; N-methyl-3-aminopropyltrimethoxysilane, N-butyl-3-aminopropyltrimethoxysilane, N-phenyl-3-aminopropyltrimethoxysilane; products of the Michael addition of alcoxysilanes comprising a primary amino group (such as 3-aminopropyltrimethoxysilane or 3-aminopropyldimethoxymethylsilane) onto Michael acceptors (such as acrylonitrile, (meth)acrylic esters, (meth)acrylamides, maleic and fumaric diesters, citraconic diesters and itaconic diesters), for example dimethyl and diethyl N-(3-trimethoxysilylpropyl)aminosuccinate. Other examples also include analogs of such listed silanes wherein methoxy groups are replaced with ethoxy or isopropoxy groups.

In one embodiment, said silane comprising at least one NCO-reactive group is of formula (I):

$$R^1\text{-}Si(OR^2)_x(R^3)_{3-x} \qquad (I),$$

in which:

- x is 2 or 3 (preferably 3),
- $R^1$ is a C1-C20 hydrocarbon group comprising at least one (e.g. one or two) NCO-reactive group, said hydrocarbon group being optionally substituted by at least one (e.g. one or two) group of formula $-Si(OR^2)_x(R^3)_{3-x}$ (x, $R^2$, $R^3$ having the same meaning as defined for formula (I)),
- $R^2$ is a C1-C20 aliphatic group, a C3-C20 alicyclic group, a C6-C20 aromatic group, a C2-C20 acyl group, or a C2-C20 iminyl group, and
- $R^3$ is a C1-C20 aliphatic group, a C3-C20 alicyclic group, a C6-C20 aromatic group,

wherein said NCO-reactive group of the silane is preferably chosen from a hydroxy group (-OH), a mercapto group (-SH), a primary amino group ($-NH_2$), a secondary amino group (-NH-), a carboxy (-COOH), and an amido (-C(O)-NH-, in particular $-C(O)NH_2$), more preferably from a primary amino group (-NH2) and a secondary amino group (-NH-).

$R^1$ may in particular be a C1-C20 aliphatic (e.g. C1-C20 alkyl or C2-C20 alkenyl), C3-C20 alicylic (e.g. C3-C20 cycloalkyl or C3-C20 cycloalkenyl), or C6-C20 aromatic group, comprising at least one (preferably, exactly one) NCO-reactive group.

$R^1$ may be a combination of an aliphatic moiety (e.g. C1-C12 alkyl) and an aromatic moiety (e.g. phenyl), such combination having 7 to 20 carbon atoms, and comprising at least one (preferably exactly one) NCO-reactive group.

Preferably, $R^1$ is a C1-C20 aliphatic (e.g. C1-C20 alkyl or C2-C20 alkenyl) or C3-C20 alicylic (e.g. C3-C20 cycloalkyl, C3-C20 cycloalkenyl) group comprising at least one (preferably exactly one) NCO-reactive group.

More preferably, $R^1$ is a C1-C12 aliphatic (e.g. C1-C12 alkyl or C2-C12 alkenyl, preferably C1-C12 alkyl) group comprising at least one (preferably exactly one) NCO-reactive group.

Even more preferably, $R^1$ is a C1-C6 alkyl comprising at least one (preferably exactly one) NCO-reactive group.

In a particular embodiment, $R^1$ is of formula $-(CH_2)_n-X$ wherein n is an integer from 1 to 8 (preferably 1 to 5) and X is -OH, -SH, or $-NHR^4$ with $R^4$ being H, a C1-C12 alkyl, aryl (e.g. phenyl), $-CH_2CH_2CN$, - $CH_2CH_2COOR^5$, or $-CH(COOR^6)CH_2-COOR^7$ with each of $R^5$, $R^6$, and $R^7$ being C1-C6 alkyl.

$R^2$ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aromatic, C2-C12 acyl, or C2-C12 iminyl group. Preferably, $R^2$ is a C1-C12 aliphatic (e.g. C1-C12 alkyl or C2-C12 alkenyl, preferably C1-C12 alkyl) group. More preferably, $R^2$ is a C1-C6 alkyl (for instance a methyl, ethyl, propyl, or isopropyl).

$R^3$ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aromatic group.

Preferably, $R^3$ is a C1-C12 aliphatic (e.g. C1-C12 alkyl or C2-C12 alkenyl, preferably C1-C12 alkyl) group. More preferably, $R^3$ is a C1-C6 alkyl (for instance a methyl, ethyl, propyl, or isopropyl).

The term "aliphatic group" refers to a saturated or unsaturated, linear or branched, acyclic hydrocarbon group.

The term "alicyclic group" refers to a saturated or unsaturated (non-aromatic), linear or branched, mono- or polycyclic hydrocarbon group.

The term "alkyl group" refers to a linear or branched, acyclic saturated hydrocarbon group.

The term "alkenyl group" refers to a linear or branched, acyclic unsaturated hydrocarbon group, comprising at least one carbon-carbon double bond.

The term "cycloalkyl group" refers to a linear or branched, mono- or poly-cyclic saturated hydrocarbon group.

The term "cycloalkenyl group" refers to a linear or branched, mono- or poly-cyclic unsaturated (non-aromatic) hydrocarbon group, comprising at least one carbon-carbon double bond.

The term "acyl" refers to a group of formula -C(O)-(aliphatic) where "aliphatic" is as defined herein. The carbon of the C=O moiety is included in the number of carbon atoms of the acyl group.

The term "iminyl" refers to a group of formula -N=C(aliphatic)(aliphatic) where each "aliphatic" is as defined herein. The carbon of the -N=C- moiety is included in the number of carbon atoms of the iminyl group.

The term "alkylene" refers to a divalent saturated, linear or branched, acyclic hydrocarbon group. The term "arylene" refers to a divalent aromatic hydrocarbon group.

The molar ratio of NCO-reactive groups of the silane to NCO groups remaining in mixture M1 is advantageously higher than or equal to 1, for instance from 1 to 5, preferably from 1 to 3, more preferably from 1 to 2, even more preferably from 1 to 1.5, for instance from 1 to 1.2.

The molar amount of NCO groups remaining in the mixture M1 obtained in step a) can be determined by titration according to standard NF EN ISO 14896 2009-05 - Plastics - Polyurethane raw materials - Determination of isocyanate content.

The contacting in step b) is typically carried out at a temperature from 5 to 95°C, more particularly from 30°C to 70°C, for instance from 50 to 70°C.

The contacting in step b) is typically carried out in the absence of solvent (e.g. in the absence of organic solvent and water).

The contacting in step b) is advantageously carried out under an inert atmosphere (e.g. $N_2$ or Ar atmosphere).

The contacting in step b) is typically carried out for a duration from 15 min to 24h, preferably from 30 min to 4h.

The weight content of the polymer mixture (in dry extract) in the composition is generally from 10 to 99.9%, preferably from 20 to 99%, or even from 20 to 80%, relative to the total dry weight of the composition.

The composition comprises (for instance, consists of) a polymer mixture as defined above, and optionally one or more of the following ingredients: adhesion promoters, fillers, plasticizers, crosslinking catalysts, drying agents, solvents, reactive diluents, stabilizers (for example against heat, light or UV radiation), rheology modifiers (such as thickeners or thixotropic agents), flame-retardant, surface-active substances (such as wetting agents, leveling agents, deaerating agents or defoamers), and biocides (such as algicides or fungicides).

More particularly, such composition comprises (for instance, consists of) a polymer mixture as defined above and optionally one or more ingredients chosen from fillers, adhesion promoters, plasticizers, crosslinking catalysts, drying agents, solvents, and reactive diluents.

The fillers may in particular be organic or mineral fillers. Examples of fillers include, but are not limited to, expanded glass, talc, dolomite, mica, ground basalt, organic or mineral pigments, kaolin (e.g. calcined kaolin), aluminum powder, chalk, powdered lime, precipitated and/or fumed silica, zeolites, bentonites, magnesium carbonate, calcium carbonate, calcium sulfate, barium sulfate, kieselguhr, alumina, clay, talc, titanium oxide, iron oxide, zinc oxide, sand, quartz, flint, mica, glass powder, carbon black, graphite, wood fibers, wood flour, wood shavings, cellulose, cotton, dried pulp, wood chips, chopped straw, chaff, ground walnut shells, glass fiber, glass filament, polyacrylonitrile, carbon fiber, Kevlar fiber, or polyethylene fibers.

The weight content of fillers (in dry extract) in the composition is generally 0.1 to 90%, preferably 1 to 80%, more preferably 5 to 75%, or even 30 to 70%, relative to the total dry weight of the composition.

An adhesion promoter refers to a substance that improves the adhesion properties of a coating layer on a surface.

The adhesion promoter may in particular be a silane (in particular an amino-, mercapto-, or epoxysilane), an organotitanate, or an organozirconate.

The adhesion promoter may in particular be a compound of formula $(R^8)_3Si-R^9-N(R^{10})_2$, where

- each $R^8$ is independently selected from C1-C8 alkyl, -O-(C1-C8 alkyl) or -O-(C1-C8 acyl), at least one radical $R^8$ being a -O-(C1-C8 alkyl) or -O-(C1-C8 acyl),
- $R^9$ is a divalent hydrocarbon radical having 1 to 12 carbon atoms and optionally containing one or more heteroatoms, and
- each $R^{10}$ is independently selected from H and C1-C8 alkyl.

The weight content of adhesion promoters (in dry extract) in the composition is generally from 0.1 to 5%, preferably from 0.2 to 3%, or even from 0.5 to 2%, relative to the total dry weight of the composition.

A crosslinking catalyst (or equivalently "curing catalyst" or "crosslinking agent") refers to a substance which facilitates the reaction of the silane-terminated polymers with water (typically from moisture), and thus the subsequent crosslinking of the silanes. Examples of crosslinking catalysts include Lewis and/or Bronsted acids and bases. The crosslinking catalyst may in particular be a metal catalyst or a nitrogen-containing catalyst.

Suitable metal catalysts are in particular organotin compounds, organotitanates, organozirconates and organoaluminates. The organotitanates, organozirconates and organoaluminates preferably have ligands which are selected from an alkoxy group, sulfonate group, carboxylate group, dialkylphosphate group, dialkylpyrophosphate group and acetylacetonate group, where all ligands may be identical or different from each other.

Examples of organotitanates include, but are not limited to, bis(ethylacetoacetato)diisobutoxytitanium(IV), bis(ethylacetoacetato)diisopropoxytitanium(IV), bis(acetylacetonato)diisopropoxytitanium(IV), bis(acetylacetonato)diisobutoxytitanium(IV), tris(oxyethyl)amineisopropoxytitanium(IV), bis[tris(oxyethyl)amine]diisopropoxytitanium(IV), bis(2-ethylhexane-1,3-dioxy)titanium(IV), bis(neopentyl(diallyl)oxydiethoxytitanium(IV), tris[2-((2-aminoethyl)amino) ethoxy]ethoxytitanium(IV), titanium(IV) tetrabutoxide, tetra(2-ethylhexyloxy) titanate, tetra(isopropoxy) titanate and polybutyl titanate.

Suitable nitrogen-containing compounds are for example amidines; amines such as in particular N-ethyldiisopropylamine, N,N,N',N'-tetramethylalkylenediamines, polyoxyalkyleneamines, 1,4-diazabicyclo[2.2.2]octane; aminosilanes such as 3-aminopropyltrimethoxysilane, 3-aminopropyldimethoxymethylsilane, N-(2-aminoethyl)-3-aminopropyltrimethoxysilane, N-(2-aminoethyl)-3-aminopropylmethyldimethoxysilane, N-(2-aminoethyl)-N'-[3-(trimethoxysilyl)propyl]ethylenediamine and analogs thereof having ethoxy or isopropoxy groups instead of methoxy groups on the silicon.

Examples of amidines include, but are not limited to, 1,8-diazabicyclo[5.4.0]undec-7-ene (DBU), 1,5-diazabicyclo[4.3.0]non-5-ene (DBN), 6-dibutylamino-1,8-diazabicyclo[5.4.0]undec-7-ene; methyl-triazabicyclodecene, guanidines such as tetramethylguanidine, 2-guanidinobenzimidazole, acetylacetoneguanidine, 1,3-di-o-tolylguanidine, 1,3-diphenylguanidine, tolylbiguanidine, 2-tert-butyl-1,1,3,3-tetramethylguanidine; and imidazoles such as N-(3-trimethoxysilylpropyl)-4,5-dihydroimidazole and N-(3-triethoxysilylpropyl)-4,5-dihydroimidazole.

The weight content of crosslinking catalysts (in dry extract) in the composition is generally from 0.001% to 5%, preferably from 0.005% to 1%, particularly preferably from 0.01% to 0.5%, relative to the total dry weight of the composition.

Examples of plasticizers include, but are not limited to:

- esters of organic carboxylic acids or their anhydrides, such as fatty acid alkyl esters, phthalates (e.g. dioctyl phthalate, diisononyl phthalate or diisodecyl phthalate), adipates (e.g. dioctyl adipate), azelates and sebacates,
- polyols, e.g. polyoxyalkylene polyols (e.g. polypropylene glycol) or polyester polyols,
- organic phosphoric and sulfonic esters (e.g. alkylsulfonic esters of phenol),

- mineral oils,
- polybutenes, or
- plasticizers based on renewable raw materials (which may likewise be fatty acid alkyl esters or combinations thereof, for instance vegetable oils, such as rapeseed oil, soybean oil and palm oil, and esters, especially methyl esters, of vegetable oils, such as rapeseed oil methyl ester, soya methyl ester and palm oil methyl ester).

The weight content of plasticizers (in dry extract) in the composition is generally from 1 to 40%, preferably from 2 to 30%, or even from 5 to 25%, relative to the total dry weight of the composition.
Examples of drying agents (or equivalently "water scavengers") include monomeric alkylsilanes and monomeric vinyl group-containing silanes, such as vinyltrimethoxysilane or vinyltriethoxysilane.
The weight content of drying agents (in dry extract) in the composition is generally from 0.1 to 10%, preferably from 0.2 to 5%, or even from 0.5 to 3%, relative to the total dry weight of the composition.
Solvents that may be used in the composition are advantageously organic solvents, and preferably bio-based and/or aromatic organic solvents. Examples of solvents are, in particular (but are not limited to), xylene, white spirits, mixture of paraffinic and naphthenic hydrocarbons having 9 to 11 carbon atoms, methyl ethyl ketone, methoxy propyl acetate, butyl acetate, ethyl acetate, or mixtures thereof.
The weight content of solvents in the composition is generally from 1 to 50 %, preferably from 2 to 30 %, or even from 3 to 20 %, relative to the total weight of the composition.
A reactive diluent refers typically to a mono-silane compound which decreases the viscosity of the composition. The reactive diluent may for instance be a mono-silane compound of formula (II):

$$R^{11}\text{-Si}(OR^{12})_y(R^{13})_{3-y} \qquad \text{(II)},$$

in which:

- y is 2 or 3 (preferably 3),
- $R^{11}$ is a hydrocarbon group comprising one or more heteroatoms,
- $R^{12}$ is a C1-C20 aliphatic group, a C3-C20 alicyclic group, a C6-C20 aromatic group, a C2-C20 acyl group, or a C2-C20 iminyl group, and
- $R^{13}$ is a C1-C20 aliphatic group, a C3-C20 alicyclic group, a C6-C20 aromatic group.

In some embodiments, $R^{11}$ is a C1-C20 aliphatic (e.g. C1-C20 alkyl or C2-C20 alkenyl), C3-C20 alicylic (e.g. C3-C20 cycloalkyl or C3-C20 cycloalkenyl), or C6-C20 aromatic group. Preferably, $R^{11}$ is a C1-C20 aliphatic (e.g. C1-C20 alkyl or C2-C20 alkenyl) or C3-C20 alicylic (e.g. C3-C20 cycloalkyl, C3-C20 cycloalkenyl) group. More preferably, $R^{11}$ is a C1-C12 aliphatic (e.g. C1-C12 alkyl or C2-C12 alkenyl, preferably C1-C12 alkyl) group.
In some embodiments, $R^{11}$ is a polymer chain chosen from a polyacrylate, a polycarbonate, a polyester, a polyurethane, a polysiloxane, a polyether, a polyisoprene, a polybutadiene, and copolymers thereof.
$R^{12}$ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aromatic, C2-C12 acyl, or C2-C12 iminyl group.
Preferably, $R^{12}$ is a C1-C12 aliphatic (e.g. C1-C12 alkyl or C2-C12 alkenyl, preferably C1-C12 alkyl) group. More preferably, $R^{12}$ is a C1-C6 alkyl (for instance a methyl, ethyl, propyl, or isopropyl).
$R^{13}$ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aromatic group.
Preferably, $R^{13}$ is a C1-C12 aliphatic (e.g. C1-C12 alkyl or C2-C12 alkenyl, preferably C1-C12 alkyl) group. More preferably, $R^{13}$ is a C1-C6 alkyl (for instance a methyl, ethyl, propyl, or isopropyl).
The weight content of reactive diluents in the composition is generally from 0.1 to 20 %, preferably from 0.2 to 10 %, or even from 0.3 to 5 %, relative to the total weight of the composition.
Advantageously, the composition comprises less than 4 wt%, preferably less than 2 wt%, more preferably less than 1 wt%, even more preferably less than 0.5 wt%, or even less than 0.2 wt% of water, relative to the total weight of the composition.
The composition is typically a mono-component composition. When the composition comprises the polymer mixture and further ingredients (e.g. chosen from those described above), such composition can be formed by adding such ingredients to the polymer mixture. In some embodiments, a composition comprising the polymer mixture and optionally further ingredients (e.g. chosen from those described above) is prepared by a process comprising:

1) preparing the polymer mixture by a process as defined herein, and
2) optionally adding further ingredients (e.g. chosen from those described above).

The waterproofing coating of the invention is formed from a composition as defined herein, and more particularly by moisture-curing such composition (or even more particularly by applying and moisture-curing such composition).

The waterproofing coating of the invention is typically a waterproofing membrane. The waterproofing coating of the invention preferably has a thickness of 0.1 to 2.5 mm, in particular 0.2 to 2.0 mm, for instance 0.2 to 1.5 mm.

Another object of the present invention is a process for waterproofing a substrate, said process comprising:

- applying a composition as defined herein on a substrate, so as to form a first coating, and
- moisture-curing said first coating, so as to form a waterproofing coating.

The applying may be carried out by any suitable technique, such as by using a roller or a brush. The applying can be done in several layers (for instance two layers).

The moisture-curing is typically a curing by the moisture from the ambient air. The moisture-curing typically occurs at room temperature, without external heating.

The waterproofing coating preferably has a thickness of 0.1 to 2.5 mm, in particular 0.2 to 2.0 mm, for instance 0.2 to 1.5 mm.

The substrate is preferably made of cementitious material (for example concrete or mortar), stone (in particular limestone), brick, terracotta, sandstone, ceramic, or any combination thereof, more preferably cementitious material.

Such substrates may in particular be substrates of roofs, terraces, balconies, wet rooms or facades. Therefore, the process of waterproofing a substrate according to the invention may in particular be a process for waterproofing a roof, terrace, balcony, wet room or facade.

In a particular embodiment, the process for waterproofing a substrate comprises:

- forming a composition as defined herein,
- applying such composition on a substrate, so as to form a first coating, and
- moisture-curing said first coating, so as to form a waterproofing coating,

wherein said composition is advantageously formed by a process comprising: .

1) preparing the polymer mixture by a process as defined herein, and
2) optionally adding further ingredients (e.g. chosen from those described above).

The present invention is illustrated by the following non-limiting examples.

EXAMPLES

1 - Synthesis of silane-terminated polymer mixtures:

a) To an aliphatic polyisocyanate prepolymer based on isophorone diisocyanate having 8% of NCO as measured by titration according to EN ISO 14896 (Polymer P1-1 and P1-2), a monool (Monoalcool -1 and -2) was added and the resulting mixture was stirred at 80°C for 4 hours, under $N_2$ atmosphere and with mechanical stirring.

b) To the mixture obtained in step a), a silane and a crosslinking catalyst were added and the resulting mixture was stirred at 60°C for 2 hours, under $N_2$ atmosphere and with mechanical stirring, so as to obtain a polymer mixture.

Three polymer mixtures according to the invention (Ex. 1-3) and a comparative polymer mixture (Comparative Ex. 1) (no monool added) were prepared. Amounts of each ingredient used for such polymer mixtures are detailed in Table 1 below.

2- Viscosity: The viscosity was determined using a rheometer, using the following conditions:

**[0147]** - cone-plate measurement system,
- T = 25°C,
- shear rate: from 0.1 to 100 $s^{-1}$, 1 point every 2 seconds (total = 100 points).

Table 1

| | Amounts (g) | | | |
|---|---|---|---|---|
| | Comparative Ex 1* | Ex. 1 | Ex. 2 | Ex. 3 |
| Polymer-P1-1 | 100.0 | 100.0 | 0.0 | 0.0 |
| Polymer-P1-2 | 0.0 | 0.0 | 100.0 | 100.0 |
| Monoalcool-1 | 0.0 | 16.5 | 16.2 | 0.0 |
| Monoalcool-2 | 0.0 | 0.0 | 0.0 | 19.0 |
| Silane | 30.9 | 19.1 | 14.8 | 16.8 |
| Catalyst | 0.01 | 0.03 | 0.03 | 0.03 |
| | | | | |
| isocyanate functions in polymer P1 (equivalent) | 1.0 | 1.0 | 1.0 | 1.0 |
| OH functions in monoalcool (equivalent) | 0.0 | 0.5 | 0.5 | 0.5 |
| NCO-reactive functions in silane derivative (equivalent) | 0.9 | 0.5 | 0.4 | 0.5 |
| | | | | |
| **Final Viscosity (Pa.s)** | **1044** | **85** | **56** | **106** |
| Viscosity increase vs prepolymer | x 206 | x 17 | x 18 | x 33 |

*0.7 g of water scavenger (vinyl trimethoxysilane) was added to the comparative polymer mixture
Polymer-P1-1: Aliphatic polyisocyanate polymer based on isophorone diisocyanate - 8%NCO - viscosity of P1-1 = ca. 5080 mPa.s
Polymer-P1-2: Aliphatic polyisocyanate polymer based on isophorone diisocyanate - 8%NCO - viscosity of P1-2 = ca. 3200 mPa.s
Monoalcool-1: Triethylene glycol monomethyl ether
Monoalcool-2: Tripropylene glycol monomethyl ether
Silane: 3-aminopropyl trimethoxysilane
Catalyst: Dibutyltin dilaurate

Results of Table 1 demonstrate that the partial functionalization of the NCO groups of a isocyanate-terminated polymer ("P1") with a monool, before adding the silane, allow to form a polymer mixture having a reduced viscosity.

## Claims

**1.** A waterproofing coating formed from a composition comprising a polymer mixture, wherein said polymer mixture is obtained by a process comprising:

a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M1; and
b) contacting said mixture M1 with a silane comprising at least one NCO-reactive group.

**2.** The waterproofing coating of claim 1, wherein polymer P1 has a number-average molecular weight of:

- at least 1000 g/mol, preferably at least 2000 g/mol; and
- at most 60 000 g/mol, preferably at most 30 000 g/mol.

**3.** The waterproofing coating of claim 1 or 2, wherein polymer P1 is a polymer chosen from a polyacrylate, a polycarbonate, a polyester, a polyurethane, a polysiloxane, a polyether, a polyisoprene, a polybutadiene, copolymers thereof and mixtures thereof, where said polymer further comprises NCO groups such that its average NCO-functionality is of at least two.

**4.** The waterproofing coating of any one of claims 1 to 3, wherein polymer P1 has an average NCO-functionality from two

to four.

5. The waterproofing coating of any one of claims 1 to 4, wherein compound C1 has a molecular weight from 50 to 25000 g/mol, preferably from 50 to 15000 g/mol, more preferably from 50 to 4000 g/mol, even more preferably from 90 to 2000 g/mol, for instance from 90 to 600 g/mol.

6. The waterproofing coating of any one of claims 1 to 5, wherein said NCO-reactive group of compound C1 is a hydroxy group, a mercapto group, a primary amino group, a secondary amino group, a carboxy, or an amido, preferably a hydroxy group.

7. The waterproofing coating of any one of claims 1 to 6, wherein said molar ratio of NCO-reactive groups of C1 to NCO groups of P1 is from 0.05 to 0.8, preferably from 0.07 to 0.7, more preferably from 0.1 to 0.6, even more preferably from 0.15 to 0.5.

8. The waterproofing coating of any one of claims 1 to 7, wherein said silane comprising at least one NCO-reactive group is of formula (I):

$$R^1\text{-}Si(OR^2)_x(R^3)_{3-x} \qquad (I),$$

in which:

- x is 2 or 3,
- $R^1$ is a C1-C20 hydrocarbon group comprising at least one NCO-reactive group, said hydrocarbon group being optionally substituted by at least one group of formula $-Si(OR^2)_x(R^3)_{3-x}$,
- $R^2$ is a C1-C20 aliphatic group, a C3-C20 alicyclic group, a C6-C20 aromatic group, a C2-C20 acyl group, or a C2-C20 iminyl group, and
- $R^3$ is a C1-C20 aliphatic group, a C3-C20 alicyclic group, a C6-C20 aromatic group.

9. The waterproofing coating of any one of claims 1 to 8, wherein said NCO-reactive group of the silane is a hydroxy group, a mercapto group, a primary amino group, a secondary amino group, a carboxy, or an amido, preferably a primary or secondary amino group.

10. The waterproofing coating of any one of claims 1 to 9, wherein polymer P1 is produced by:

o) reacting a polymer P0 comprising NCO-reactive groups with an average NCO-reactive-functionality of at least two with a diisocyanate,
wherein polymer P0 preferably has an average NCO-reactive-functionality from two to four.

11. The waterproofing coating of claim 10, wherein polymer P0 has a number-average molecular weight of:

- at least 1000 g/mol, preferably at least 2000 g/mol; and
- at most 60 000 g/mol, preferably at most 30 000 g/mol.

12. The waterproofing coating of claim 10 or 11, wherein polymer P0 is chosen from hydroxyl-terminated polyethers, hydroxyl-terminated polycarbonates, amine-terminated polyethers, amine-terminated polyesters, hydroxyl-terminated polyesters, hydroxyl-terminated polycarbonate polyesters, hydroxyl-terminated polyisoprenes, hydroxyl-terminated polybutadienes, copolymers thereof and mixtures thereof.

13. The waterproofing coating of any one of claims 10 to 12, wherein the molar ratio of NCO groups of the diisocyanate to the NCO-reactive groups of polymer P0 is from 1.1 to 3, preferably from 1.4 to 2.8, more preferably from 1.6 to 2.4, for instance from 1.8 to 2.2.

14. The waterproofing coating of any one of claims 1 to 13, wherein said composition further comprises one or more ingredients chosen from fillers, adhesion promoters, plasticizers, crosslinking catalysts, drying agents, solvents, and reactive diluents.

15. The waterproofing coating of any one of claims 1 to 14, wherein said waterproofing coating has a thickness of 0.1 to 2.5 mm, in particular 0.2 to 2.0 mm, for instance 0.5 to 1.5 mm.

**16.** A process for waterproofing a substrate, said process comprising:

- applying a composition as defined in any one of claims 1 to 15 on a substrate, so as to form a first coating, and
- moisture-curing said first coating, so as to form a waterproofing coating,

said waterproofing coating preferably having a thickness of 0.1 to 2.5 mm, in particular 0.2 to 2.0 mm, for instance 0.5 to 1.5 mm.

Europäisches Patentamt
European Patent Office
Office européen des brevets

# EUROPEAN SEARCH REPORT

Application Number
EP 24 18 7482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/042609 A1 (BAYER MATERIALSCIENCE LLC [US]; BAYER AG [DE] ET AL.) 12 May 2005 (2005-05-12)<br>* examples 1-4, 7-10 *<br>* page 7, line 22 - page 8, line 2 *<br>----- | 1-16 | INV.<br>C08G18/10<br>C08G18/12<br>C08G18/24<br>C08G18/28<br>C09D175/04<br>C09J175/04 |
| X | EP 2 548 903 A1 (SUNSTAR ENGINEERING INC [JP]) 23 January 2013 (2013-01-23)<br>* paragraph [0007]; examples 1, 2 *<br>* paragraph [0019] *<br>----- | 1-16 | |
| | | | TECHNICAL FIELDS SEARCHED (IPC) |
| | | | C08G<br>C09D<br>C09J |

The present search report has been drawn up for all claims

1

| Place of search | Date of completion of the search | Examiner |
|---|---|---|
| Munich | 26 November 2024 | Sütterlin, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 7482

This annex lists the patent family members relating to the patent documents cited in the above-mentioned European search report. The members are as contained in the European Patent Office EDP file on
The European Patent Office is in no way liable for these particulars which are merely given for the purpose of information.

26-11-2024

| Patent document cited in search report | Publication date | Patent family member(s) | Publication date |
|---|---|---|---|
| WO 2005042609 A1 | 12-05-2005 | AU 2004285912 A1 | 12-05-2005 |
| | | BR PI0415257 A | 26-12-2006 |
| | | CA 2542949 A1 | 12-05-2005 |
| | | CN 1871269 A | 29-11-2006 |
| | | EP 1678229 A1 | 12-07-2006 |
| | | JP 2007526356 A | 13-09-2007 |
| | | KR 20060090712 A | 14-08-2006 |
| | | MX PA06004395 A | 14-06-2006 |
| | | TW 200514799 A | 01-05-2005 |
| | | US 2004127670 A1 | 01-07-2004 |
| | | WO 2005042609 A1 | 12-05-2005 |
| EP 2548903 A1 | 23-01-2013 | CN 102791759 A | 21-11-2012 |
| | | EP 2548903 A1 | 23-01-2013 |
| | | JP 5769929 B2 | 26-08-2015 |
| | | JP 2011195617 A | 06-10-2011 |
| | | MY 159843 A | 15-02-2017 |
| | | SG 183926 A1 | 30-10-2012 |
| | | TW 201139481 A | 16-11-2011 |
| | | US 2013035453 A1 | 07-02-2013 |
| | | WO 2011114911 A1 | 22-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2952533 A
- EP 2948487 A
- US 9102854 B
- US 5158922 A
- EP 0654302 A
- EP 0950679 A


### Non-patent literature cited in the description


- **WOHLER**. *Journal of the American Chemical Society*, 1927, vol. 49, 3181